# EUROPEAN PATENT APPLICATION

(11) **EP 1 871 137 A2**
(43) Date of publication of application: **26.12.2007**
(21) Application number: 07012198.3
(22) Date of filing: 21.06.2007
(51) Int. Cl.: H04Q 7/38

(54) **Method and apparatus for handling status report after handover in a wireless communications system**

(30) Priority: 22.06.2006 US 805471 P
(71) Applicant: Innovative Sonic Limited, Road Town Tortola (VG)
(72) Inventor: Jiang, Sam Shiaw-Shiang, Peitou, Tapei City (TW)
(74) Representative: Schaeberle, Steffen

(57) **Abstract**

To reduce overhead in transmission of a wireless communications system upon handover from a source base station to a target base station, a request received by a transmitter for retransmitting a packet that has been confirmed before is neglected (308). Requests received by a receiver from the target base station for retransmitting a packet that has been confirmed by the source base station are also neglected (410).

## Description

This application claims the benefit of the filing date of U.S. Provisional Patent Application No. 60/805,471, filed on June 22, 2006, the contents of which are hereby incorporated by reference.

The present invention relates to a method for handling status reports after handover in a wireless communications system and related communications device according to the pre-characterizing clause of claims 1 , 4, 7 and 10.

In a 3^{rd} generation (3G) telecommunications system, 3GPP TR 25.813 V7.0.0, "Evolved Universal Terrestrial Radio Access (E-UTRA) and Evolved Universal Terrestrial Radio Access Network (E-UTRAN) Radio Interface Protocol Aspects (Release 7)," describes an intra E-UTRAN handover for a Long Term Evolution (LTE) system. Section 9.1.7 of 3GPP TR 25.813 describes aspects of the intra E-UTRAN handover as follows. Upon handover, a source evolved NodeB (eNB) forwards all downlink RLC SDUs to a target eNB, starting from the first SDU that has not been successfully received by a user equipment (UE). The source eNB discards remaining downlink RLC PDUs, and the target eNB retransmits downlink RLC SDUs forwarded by the source eNB. The source eNB does not forward downlink RLC context to the target eNB. Upon handover, the source eNB forwards uplink RLC SDUs that are successfully received to an access gateway (aGW) and discards remaining uplink RLC PDUs. The UE retransmits the uplink RLC SDUs that the source eNB has not successfully received. The source eNB neither forwards uplink RLC SDUs nor the uplink RLC context to the target eNB. The PDCP within the aGW may also support reordering of uplink RLC SDUs during handover. In UTRAN, upon handover, the RLC entity is re-established. Accordingly, all status variables are reset to initial values, the sequence numbers (SN) of the RLC PDU that is to be first transmitted and the RLC PDU that is expected to be received next are both reset to zero.

The handover procedure works fine when the RLC entity and the RLC re-establishment procedure specified above is used. However, in LTE, the PDCP entity, which is an upper layer of the RLC entity, must provide a PDCP SN for each packet, i.e. for each RLC SDU, to facilitate ciphering functionality. The RLC entity can use the PDCP SN to perform reordering, duplication detection, flow control, and ARQ. Thus, it is possible that the RLC header of the RLC PDU will not have an extra RLC SN field in order to reduce protocol overhead. When there is no RLC SN field in RLC PDU header, i.e. when the PDCP SN is used for ARQ in the RLC entity, the PDCP SN cannot be reset by the RLC entity. Consequently, during the handover procedure described above, problems and inefficiency due to missing RLC PDUs may occur.

This in mind, the present invention aims at providing a method for handling status reports after handover in a wireless communications system and related communications device that reduces unnecessary signaling after handover.

This is achieved by a method for handling status reports after handover in a wireless communications system and related communications device according to claims 1, 4, 7 and 10. The dependent claims pertain to corresponding further developments and improvements.

As will be seen more clearly from the detailed description following below, the claimed method for handling status reports after handover in a wireless communications system and related communications device includes neglecting a request in the status report received by a transmitter for retransmitting a packet that has been confirmed before.

In the following, the invention is further illustrated by way of example, taking reference to the accompanying drawings. Thereof
Fig. 1 is a function block diagram of a wireless communications device,
Fig. 2 is a diagram of program code of Fig. 1,
Fig. 3 is a flowchart of a process according to the present invention, and
Fig. 4 is a flowchart of a process according to a second embodiment of the present invention.

The third generation (3G) mobile telecommunications system has adopted a Wideband Code Division Multiple Access (WCDMA) wireless air interface access method for a cellular network. WCDMA provides high frequency spectrum utilization, universal coverage, and high quality, high-speed multimedia data transmission. The WCDMA method also meets all kinds of QoS requirements simultaneously, providing diverse, flexible, two-way transmission services and better communication quality to reduce transmission interruption rates. Through the 3G mobile telecommunications system, a user can utilize a wireless communications device, such as a mobile phone, to realize real-time video communications, conference calls, real-time games, online music broadcasts, and email sending/receiving. However, these functions rely on fast, instantaneous transmission. Thus, targeting third generation mobile telecommunication technology, the prior art provides High Speed Downlink Package Access (HSDPA) and High Speed Uplink Package Access (HSUPA), which are used to increase bandwidth utility rate and package data processing efficiency to improve uplink/downlink transmission rate.

In data transmission on the uplink, i.e. transmission from the UE to the eNB, suppose PDCP SN = 0, 1, 2, 3, 4, 5, ..., 20 have been transmitted on the uplink before a handover occurs. Upon handover, all the RLC PDUs are received successfully and are positively acknowledged by the source eNB, except for PDCP SN = 2 and 3. After handover, the UE transmits PDCP SN = 2 and 3, and then transmits PDCP SN = 21, 22, 23, .... Since "the source eNB neither forwards uplink RLC SDUs nor the uplink RLC context to the target eNB," as specified in 3GPP TR 25.81 3, the target eNB has no information about the uplink RLC context. In other words, the target eNB has no information indicating that the PDCP SN = 4-20 have been successfully received by the source eNB. Thus, the target eNB will request retransmission of them by sending a status report indicating that PDCP SN = 4-20 are missing. At the same time, received RLC SDUs with PDCP SN greater than 20 are held in the buffer. In addition, the UE may have discarded RLC SDUs with PDCP SN = 4-20, because they have been positively acknowledged by the source eNB before the handover procedure. Consequently, it is impossible for the UE to retransmit PDCP SN = 4-20 as requested by the target eNB. Thus, besides unnecessary ARQ signaling that wastes radio resources, data latency for received RLC SDUs is also deteriorated. No UE behavior is specified for dealing with this situation. In the prior art UTRA specified in 3GPP TS 25.322, when an SN is negatively acknowledged after the SN has been positively acknowledged, a reset procedure is triggered. For the handover procedure described above, when the PDCP SN is reused for ARQ, the reset procedure should not be triggered. In other words, 3GPP TR 25.813 and 3GPP TS 25.322 are in conflict with each other.

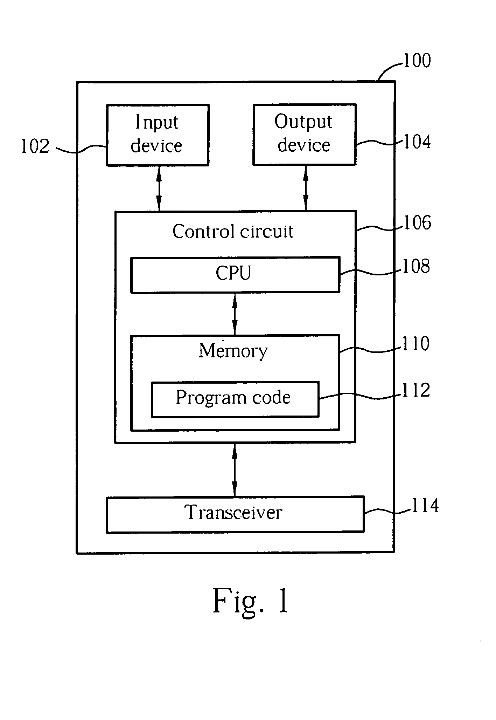

Please refer to Fig. 1, which is a function block diagram of a communications device 100. For the sake of brevity, Fig. 1 only shows an input device 102, an output device 104, a control circuit 106, a central processing unit (CPU) 108, a memory 110, a program code 112, and a transceiver 114 of the communications device 100. In the communications device 100, the control circuit 106 executes the program code 112 in the memory 110 through the CPU 108, thereby controlling an operation of the communications device 100. The communications device 100 can receive signals input by a user through the input device 102, such as a keyboard, and can output images and sounds through the output device 104, such as a monitor or speakers. The transceiver 114 is used to receive and transmit wireless signals, delivering received signals to the control circuit 106, and outputting signals generated by the control circuit 106 wirelessly. From a perspective of a communications protocol framework, the transceiver 114 can be seen as a portion of Layer 1, and the control circuit 106 can be utilized to realize functions of Layer 2 and Layer 3. Preferably, the communications device 100 is utilized in a third generation (3G) mobile communications system.

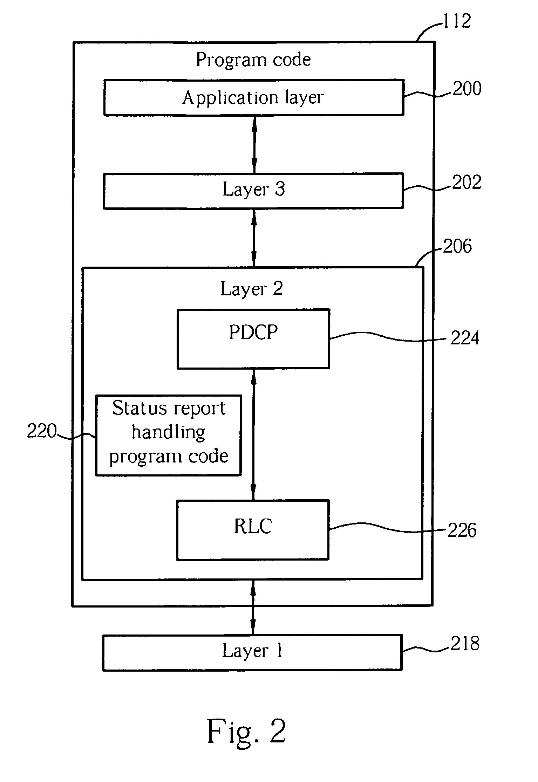

Please continue to refer to Fig. 2. Fig. 2 is a diagram of the program code 112 shown in Fig. 1. The program code 112 includes an application layer 200, a Layer 3 202, and a Layer 2 206, and is coupled to a Layer 1 218. The Layer 2 206 comprises two sub-layers: a radio link control (RLC) entity 226 and a packet data convergence protocol (PDCP) entity 224. The PDCP entity 224 is an upper layer to the RLC entity 226. Primary functions of the RLC entity 226 include segmentation, reassembly, concatenation, padding, retransmission, sequence check, and duplication detection on transmitted data or control instructions based on different transmission quality requirements. The PDCP entity 224 is primarily responsible for compression/decompression of headers, transfer of user data, ciphering and maintenance of PDCP sequence numbers.

In LTE, the PDCP entity 224 must provide a PDCP SN for each packet, i.e. for each RLC SDU, to facilitate ciphering functionality. The RLC entity 226 can use the PDCP SNs when performing re-ordering, duplication detection, flow control, and ARQ functionalities. Thus, it is possible that there is no extra RLC SN field in the RLC header of a RLC PDU to reduce protocol overhead. To increase efficiency during handover, the program code 112 comprises a status report handling program code 220.

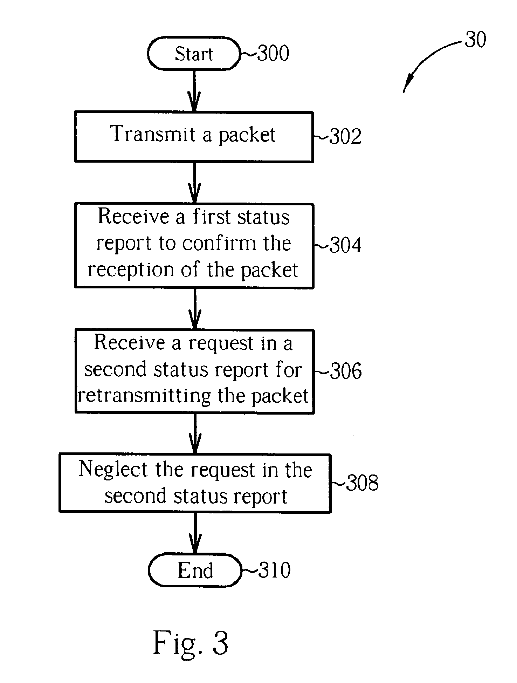

Please refer to Fig. 3, which is a flowchart of a process 30 according to a first embodiment of the present invention. The process 30 is utilized for handling a status report in the wireless communications system, and can be compiled into the status report handling program code 220. The process 30 comprises the following steps:
- Step 300:: Start.
- Step 302:: Transmit a packet.
- Step 304:: Receive a first status report to confirm the reception of the packet.
- Step 306:: Receive a request in a second status report for retransmitting the packet.
- Step 308:: Neglect the request in the second status report.
- Step 310:: End.

According to the process 30, if the transmitter receives the request in a status report to retransmit the packet that has already been confirmed, the transmitter neglects the request. In other words, the transmitter does not retransmit the packet which has already been confirmed. This reduces data latency. Preferably, the transmitter responds by sending a message to indicate that the packet is discarded. Also, preferably, the transmitter responds by sending a message to indicate that the packet has been confirmed. Note that in the process 30, the transmitter can receive the second status report before handover to another base station. In other words, there is no handover involved in the process 30.

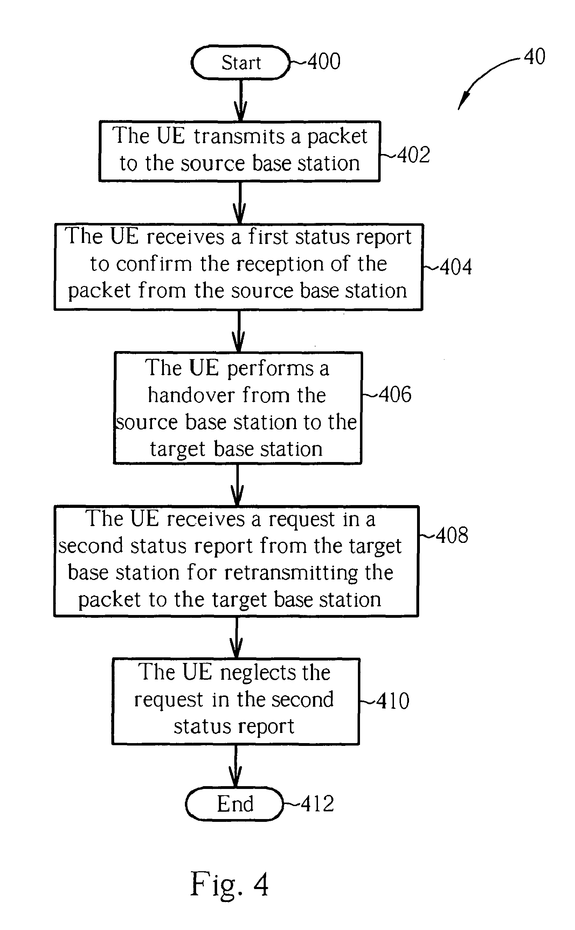

Please refer to Fig. 4, which is a flowchart of a process 40 according to a second embodiment of the present invention. The process 40 is utilized for handling the status report after handover of a user equipment (UE) from a source base station to a target station in the wireless communications system, and can be compiled into the status report handling program code 220. The process 40 comprises the following steps:
- Step 400:: Start.
- Step 402:: The UE transmits a packet to the source base station.
- Step 404:: The UE receives a first status report to confirm the reception of the packet from the source base station.
- Step 406:: The UE performs a handover from the source base station to the target base station.
- Step 408:: The UE receives a request in a second status report from the target base station for retransmitting the packet to the target base station.
- Step 410:: The UE neglects the request in the second status report.
- Step 412:: End.

According to the process 40, when the UE receives the request in a status report from the target base station to retransmit the packet that has already been confirmed by the source base station, the receiver neglects the request. In other words, the transmitter does not retransmit the packet which has already been confirmed. This solves the problem in the prior art of unnecessary ARQ signalling that wastes radio resources and deteriorates data latency for received RLC SDUs. Preferably, the UE responds by sending a message to the target base station to indicate that the packet is discarded. Also, preferably, the UE responds by sending a message to the target base station to indicate that the packet has been confirmed by the source base station. Note that, within the process 40, the UE performs a handover from the source base station to the target base station before receiving the second status report.

In summary, compared to the prior art, the present invention is able to reduce unnecessary signaling after handover by neglecting requests for retransmission of packets that have already been received.

## Claims

1. A method of handling a status report in a wireless communications system, **characterized by** the method comprising:
neglecting a request in the status report received by a transmitter for retransmitting a packet that has been confirmed before (308).

2. The method of claim 1 **characterized by** the transmitter sending a message to indicate that the packet is discarded.

3. The method of claim 1 **characterized by** the transmitter sending a message to indicate that the packet has been confirmed.

4. A communications device (100) utilized in a wireless communications system for handling a status report, the communications device comprising:
a control circuit (106) for realizing functions of the communications device;
a central processing unit (108) installed in the control circuit for executing program codes to operate the control circuit; and
a memory (110) coupled to the central processing unit;
**characterized in that** the memory comprises:
program code for neglecting a request in the status report for retransmitting a packet that has been confirmed before (308).

5. The communications device of claim 4, **characterized in that** the memory further comprises program code executed for sending a message to indicate that the packet is discarded.

6. The communications device of claim 4, **characterized in that** the memory further comprises program code executed for sending a message to indicate that the packet has been confirmed.

7. A method of handling a status report after handover of a user equipment from a source base station to a target base station, **characterized by** the method comprising:
neglecting a request in the status report received by the user equipment from the target base station for retransmitting a packet that has been confirmed by the source base station (410).

8. The method of claim 7 **characterized by** the user equipment sending a message to the target base station to indicate that the packet is discarded.

9. The method of claim 1 **characterized by** the user equipment sending a message to the target base station to indicate that the packet has been confirmed by the source base station.

10. A communications device (100) utilized in a wireless communications system for handling a status report after handover of a user equipment from a source base station to a target base station, the communications device comprising:
a control circuit (106) for realizing functions of the communications device;
a central processing unit (108) installed in the control circuit for executing program codes to operate the control circuit; and
a memory (110) coupled to the central processing unit;
**characterized in that** the memory comprises:
program code for neglecting a request in the status report from the target base station for retransmitting a packet that has been confirmed by the source base station (410).

11. The communications device of claim 10, **characterized in that** the memory further comprises program code executed for sending a message to the target base station to indicate that the packet is discarded.

12. The communications device of claim 10, **characterized in that** the memory further comprises program code executed for sending a message to the target base station to indicate that the packet has been confirmed by the source base station.
